# EUROPEAN PATENT APPLICATION

(11) **EP 4 625 215 A1**
(43) Date of publication of application: **01.10.2025**
(21) Application number: 22969882.4
(22) Date of filing: 30.12.2022
(51) Int. Cl.: G06F 21/00

(54) **METHOD FOR DEPLOYING AUTOMATION FUNCTION ON MOBILE DEVICE AND INFORMATION PROCESSING METHOD**

(71) Applicant: Siemens Aktiengesellschaft, 80333 München (DE)
(72) Inventor: WANG, Tongzhou, Beijing 102600 (CN); LI, Dong, Beijing 100025 (CN); ZHANG, Chuanyu, Beijing 100028 (CN)
(74) Representative: Isarpatent
(86) International application number: PCT/CN2022/144348
(87) International publication number: WO 2024/138742

(57) **Abstract**

The present disclosure relates to a method for deploying an automation function on a mobile device and an information processing method. For the method for deploying an automation function on a mobile device in an automation system, the automation system comprises an automation device, a management server, and a mobile device, wherein function operation containers of multiple mobile devices are registered in the management server. The method comprises: the management server deploying an automation function in the function operation container of the mobile device; executing the automation function in the function operation container; and performing data exchange between the function operation container and the management server on the basis of an execution result of the automation function.

## Description

### Technical Field

The present disclosure relates generally to the technical field of automation systems, in particular to a method for deploying an automation function on a mobile device, and an information processing method.

### Background Art

Modern mobile phones are very powerful in terms of computing speed, internal memory capacity, storage and even AI performance, etc. They also integrate a large number of sensors and connection devices, such as cameras, GPS, cellular networks, Bluetooth, WiFi, NFC, etc. Due to the effect of the huge scale of the mobile phone industry, as well as its mature supply chain, mobile phones are very cheap. In comparison, automated devices are much more expensive, due to smaller production quantities, a higher degree of cost sharing, and higher requirements for reliability and safety.

Factory operators have long wished for a method of deploying non-critical automation functions on mobile phones. These mobile phones are not only cheap and easy to obtain, but also typically have better performance and lower power consumption.

However, due to the fact that there is such a large number of mobile phones of different types, with different performance levels, sensors and even operating systems, automation providers find it very difficult to verify all of these devices and design a specific program for each device.

At present, there are already instances of mobile phones being used in factory production environments.

For example, some factory operators use several dozen mobile phones to establish a factory monitoring system. These mobile phones have very good imaging quality, even in dark environments. More importantly, factory operators can use artificial intelligence chips within mobile phones for content identification, thereby reducing the workload of safety personnel. Some factory operators use mobile phones as gateways. They use mobile hotspots and VPN functionality to establish virtual dedicated networks among different sites throughout the world. Some factory operators use fingerprint readers or face readers on mobile phones to perform authentication.

However, all of these use cases are considered to be "hacks" used by factory operators. Non-standard systems established using these "hacks" typically operate independently, and cannot be easily integrated with "serious" automation systems. For this reason, factory operators need to deal with many different systems to achieve different objectives.

### Summary of the Invention

A brief summary of the present invention is given below, in order to provide a basic understanding of certain aspects of the present invention. It should be understood that this summary is not an exhaustive summary of the present invention. It is intended neither to determine key or important parts of the present invention, nor to limit the scope thereof. Its sole purpose is to set out certain concepts in simplified form, as a preamble to the more detailed description that follows.

In view of the above, the present disclosure proposes a solution for using a mobile device to deploy automation functions in an automation system.

According to one aspect of the present disclosure, a method for registering a mobile device in an automation system is provided, wherein the automation system comprises an automated device, a management server and a mobile device, the method comprising:
installing a subroutine operation container on the mobile device;
the subroutine operation container loading a web page from the management server;
the web page being activated to check capability of the mobile device;
the subroutine operation container sending an overview of the capability to the management server; and
the management server registering the subroutine operation container and the overview of the capability in a registration table.

In this way, all mobile devices can be registered in the management server.

Optionally, in an example of the abovementioned aspect, the capability comprises at least one of the following: CPU speed, internal memory capacity, storage space, camera parameters, geographic positioning precision, accelerator state, flash lamp state, fingerprint sensor, near field communication (NFC) capability, Bluetooth availability, speaker availability, screen dimensions, vibrator availability.

In this way, an overview of all capabilities relating to the mobile device can be registered in the registration table.

Optionally, in an example of the abovementioned aspect, the subroutine operation container establishes a WebSocket connection to the management server, and sends the overview of the capability to the management server via the WebSocket connection.

According to another aspect of the present disclosure, a method for deploying an automation function in a mobile device in an automation system is provided, wherein the automation system comprises an automated device, a management server and a mobile device, wherein subroutine operation containers of multiple mobile devices are registered in the management server:
the management server deploying an automation subroutine in the subroutine operation container of the mobile device;
executing the automation subroutine in the subroutine operation container; and
the subroutine operation container performing data exchange with the management server, based on a result of executing the automation subroutine.

In this way, an automation subroutine container can be used as a runtime environment of an automation subroutine, and all capabilities of the mobile device can be packaged.

Optionally, in an example of the abovementioned aspect, the automation subroutine comprises at least one of the following: environment monitoring and processing, acquisition and processing of images and video, QR code acquisition and processing, NFC reading/writing, tracking and processing of position and attitude.

In this way, certain non-critical automation functions can be deployed on mobile devices as required.

In an example of the abovementioned aspect, the automation subroutine is written in C/C++ language, and finally compiled in the form of WebAssembly binary code for deployment, the automation subroutine being able to call a programming interface provided by the subroutine operation container.

In this way, all automation subroutines are compiled as WebAssembly binary code and sent to subroutine operation containers to be executed. A standard API for C/C++ programs is used to access an API of the mobile device itself, so automation subroutine developers do not need to learn an API on each specific type of mobile device.

According to another aspect of the present disclosure, an information processing method is provided, comprising:
loading a web page from a management server;
the web page being activated to check capability of a mobile device;
sending an overview of the capability of the mobile device to the management server;
receiving and deploying an automation subroutine from the management server;
executing the automation subroutine; and
performing data exchange with the management server, based on a result of executing the automation subroutine.

According to another aspect of the present disclosure, an information processing method is provided, comprising:
receiving an overview of capability and a subroutine operation container from a mobile device, and registering same in a registration table;
deploying a pre-written automation subroutine in a subroutine operation container of at least one mobile device in the registration table; and
receiving subroutine operation result data from the mobile device and exchanging same with an automated device.

According to another aspect of the present disclosure, a computing device is provided, comprising: at least one processor; and a memory coupled to the at least one processor, the memory being used to store an instruction which, when executed by the at least one processor, causes the processor to perform the method described above.

According to another aspect of the present disclosure, a non-transitory machine-readable storage medium is provided, storing an executable instruction which, when executed, causes the machine to perform the method described above.

According to another aspect of the present disclosure, a computer program is provided, comprising a computer-executable instruction which, when executed, causes at least one processor to perform the method described above.

According to another aspect of the present disclosure, a computer program product is provided, tangibly stored on a computer-readable medium and comprising a computer-executable instruction which, when executed, causes at least one processor to perform the method described above.

According to the technical solution of the present disclosure, subroutine operation containers are used to unify mobile devices of different types. An automation subroutine is programmed according to a subroutine operation container API interface, so it is irrelevant which mobile device realizes the automation subroutine, as long as the mobile device meets all requirements of this automation subroutine with regard to mobile device capability. Automation subroutines are managed in a centralized manner in the management server; therefore, if a mobile device suddenly experiences a fault, the user can simply find another mobile device, install a subroutine operation container thereon, and connect it to the management server, which can then deploy the same function on the new mobile device smoothly. Thus, migration or replacement of mobile devices is very simple.

### Brief Description of the Drawings

The abovementioned and other objectives, characteristics and advantages of the present invention will be easier to understand with reference to the following description of embodiments of the present invention in conjunction with the drawings. The components in the drawings are merely intended to show the principles of the present invention. In the drawings, identical or similar technical features or components are indicated with identical or similar reference labels. In the drawings:
Fig. 1 is a schematic diagram of an automation system employing the technical solution of the present invention.
Fig. 2 is a flow chart of an exemplary process of a method for registering a mobile device in an automation system according to embodiments of the present disclosure.
Fig. 3 is a flow chart of an exemplary process of a method for deploying an automation function in a mobile device according to embodiments of the present disclosure.
Fig. 4 is a flow chart of an exemplary process of an information processing method according to embodiments of the present disclosure, performed at a mobile device.
Fig. 5 is a flow chart of an exemplary process of an information processing method according to embodiments of the present disclosure, performed at a management server.
Fig. 6 shows a block diagram of a computing device for an information processing method according to embodiments of the present disclosure. Key to the drawings:
   10: automation system
   102: automated device
   104: mobile device
   106: management server
   103: factory network
   105: internet
   108: gateway
   200: method for registering mobile device
   300: method for deploying automation function
   400, 500: information processing method
   S202, S204, S206, S208, S210, S302, S304, S306, S402, S404, S406, S408, S410, S412, S502, S504, S506: steps
   600: computing device
   602: processor
   604: memory

### Detailed Description of the Invention

The subject matter described herein is now discussed with reference to exemplary embodiments. It should be understood that the sole purpose of discussing these embodiments is to enable those skilled in the art to better understand and thereby implement the subject matter described herein, without limiting the protection scope, applicability or examples expounded in the claims. Changes may be made to the functions and arrangement of the discussed elements without departing from the scope of protection of the content of the present disclosure. Various processes or components may be omitted from, replaced in or added to various examples as required. For example, the described method may be performed in a different order from that described, and various steps may be added, omitted or combined. Furthermore, features described in relation to some examples may also be combined in other examples.

As used herein, the term "comprising" and variants thereof denote open terms meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions may be included below, whether explicit or implicit. Unless clearly specified in the context, the definition of a term is the same throughout the description.

In view of the above, the present disclosure proposes a solution for using a mobile device to deploy automation functions in an automation system.

The technical solution according to embodiments of the present disclosure is described below with reference to the drawings.

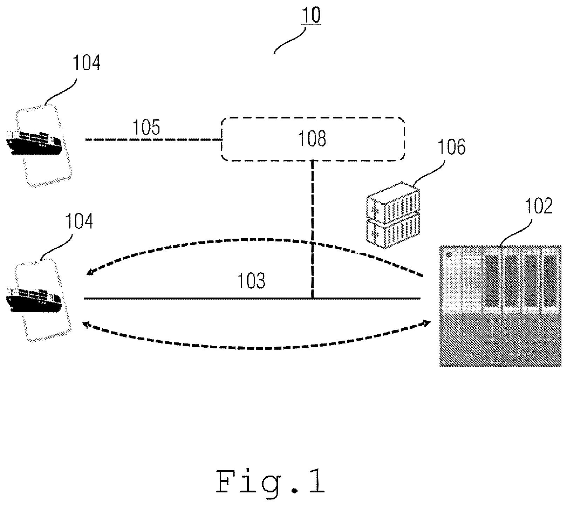

Fig. 1 is a schematic diagram of an automation system 10 in the technical solution of the present invention. The automation system 10 comprises an automated device 102, mobile devices 104 and a management server 106. Devices within the automation system 10 communicate via a factory network 103, for example.

The automated device 102 may be any industrial device, including instruments, meters, electric machines, etc. In the solution of the present invention, it is desired to deploy certain non-critical automation functions on mobile devices; in this case, the mobile devices 104 may be any portable mobile devices that can be held by a user, such as mobile phones, tablet computers and notebook computers. Of these, mobile phones are cheap, convenient and in common use, and are therefore typically chosen as mobile devices.

If it is desired to deploy an automation function on a mobile device that is not within the factory network 103, a virtual private network (VPN) gateway 108 can be set up between the factory network 103 and the internet 105; the mobile device 104 is connected to the internet 105 via local WiFi or a cellular network, and then establishes a connection to the factory network 103 via the VPN gateway 108.

In the technical solution of the present invention, for automation functions in the automation system 10 to be deployed on the mobile devices, it is first necessary to register the mobile devices 104 in the management server 106 of the automation system; the automation functions can then be deployed on the mobile devices 104 in a registration table.

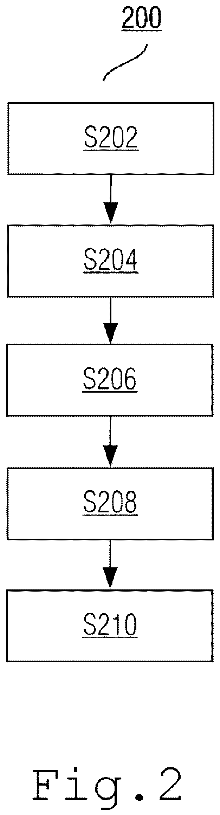

A method 200 for registering a mobile device in an automation system is now described with reference to Fig. 2. Fig. 2 is a flow chart of an exemplary process of the method 200 for registering a mobile device in an automation system according to embodiments of the present disclosure.

Firstly, in step S202, a subroutine operation container is installed on the mobile device.

The subroutine referred to here is an automation subroutine for performing an automation function in the automation system; the subroutine operation container is thus equivalent to an APP for executing each automation subroutine. The subroutine operation container APP first needs to be installed on the mobile device, e.g. mobile phone, of the user.

Next, in step S204, the subroutine operation container loads a web page from a management server.

The management server is a device used to coordinate and manage all automation subroutines; it may be integrated with a server that manages all automated devices in the automation system, or may be a separate management server.

The subroutine operation container connects to the management server by opening a web page of the management server.

In step S206, the web page is activated, to check the capabilities of the mobile device.

Once the web page has been loaded, the web page can check all capabilities of the mobile device which is running **it.**

Specifically, the capabilities referred to here include but are not limited to: CPU speed, internal memory capacity, storage space, camera parameters, geographic positioning precision, accelerator state, flash lamp state, fingerprint sensor, near field communication (NFC) capability, Bluetooth availability, speaker availability, screen dimensions, vibrator availability.

After completion of checking, in step S208, the subroutine operation container sends an overview of the capabilities of the mobile device to the management server.

Specifically, the subroutine operation container establishes a WebSocket connection to the management server, and sends an overview of the capabilities of the mobile device to the management server via the WebSocket connection.

The overview of capabilities referred to here is an overview of all capabilities of the mobile device.

In step S210, the management server registers the subroutine operation container and the overview of capabilities in a registration table.

Specifically, the management server receives the WebSocket connection and the overview of capabilities of the mobile device, and registers the subroutine operation container together with the overview of capabilities in the registration table of the management server.

By means of the process described above, multiple mobile devices can be registered in the management server successively. Within the management server, the user can open and manage subroutine operation containers in the registration table, ascertain the capabilities of each mobile device from the overviews of capabilities in the registration table, and deploy an automation subroutine in a subroutine operation container of a suitable mobile device via a front end of the management server.

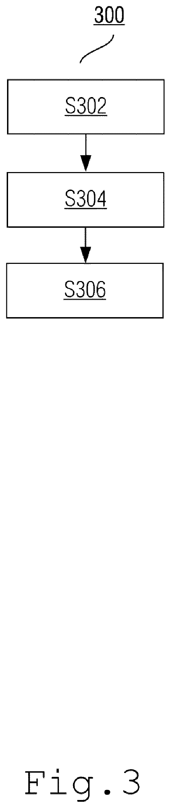

Next, a method 300 for deploying an automation function in a mobile device is explained with reference to Fig. 3.

Fig. 3 is a flow chart of an exemplary process of the method 300 for deploying an automation function in a mobile device according to embodiments of the present disclosure.

Before the method 300 is performed, the method 200 shown in Fig. 2 for registering a mobile device in an automation system has already been used to register the subroutine operation containers of multiple mobile devices in the management server.

Firstly, in step S302, the management server deploys an automation subroutine in a subroutine operation container of the mobile device.

Different automation subroutines are used to perform corresponding automation functions in the automation system; for example, automation subroutines may include: environment monitoring and processing, acquisition and processing of images and video, QR code acquisition and processing, NFC reading/writing, tracking and processing of position and attitude, etc. The choice of which automation subroutines to deploy can be made according to the different needs of different automated devices, and the choice can be made to deploy these on suitable mobile devices according to the capabilities of the mobile devices registered in the registration table; a specific description is not given here. It will be understood that the automation subroutines listed here are merely examples given for illustration; the automation subroutines that can be deployed in the technical solution of the present invention are not limited to those stated above. Personnel can select various languages to write and develop different automation subroutines in advance, and preferably compile them in the form of WebAssembly binary code; in step S302, the WebAssembly binary code of the automation subroutine can be deployed in the subroutine operation container.

Next, in step S304, the automation subroutine is executed in the subroutine operation container.

In step S306, the subroutine operation container performs data exchange with the management server, based on a result of executing the automation subroutine.

The automation subroutine is generally written using C/C++, and has a subroutine operation container API interface and a management server API interface. The subroutine operation container API interface enables the automation subroutine to access a mobile device interface (e.g. a camera, geographic positioning, etc.). The management server API interface enables communication between the automation subroutine of the subroutine operation container and the management server, in order to perform data exchange, and thereby realize data exchange with the automated device.

Through the operations described above, the subroutine operation container unifies mobile devices of different types. The automation subroutine is programmed according to the subroutine operation container API interface, so it is irrelevant which mobile device realizes the automation subroutine, as long as the mobile device meets all requirements of this automation subroutine with regard to mobile device capability.

Automation subroutines are managed in a centralized manner in the management server; therefore, if a mobile device suddenly experiences a fault, the user can simply find another mobile device, install a subroutine operation container thereon, and connect it to the management server, which can then deploy the same function on the new mobile device smoothly. Thus, migration or replacement of mobile devices is very simple.

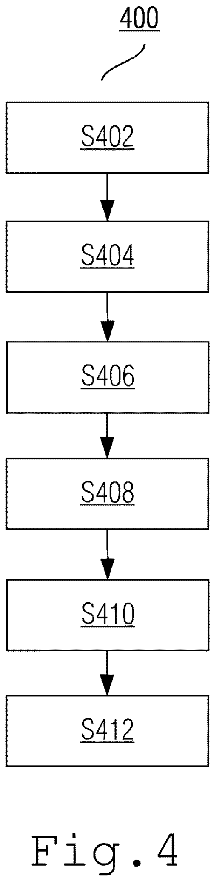

The method for registering a mobile device in an automation system and the method for deploying an automation subroutine according to embodiments of the present disclosure, which are described above, involve two aspects: the mobile device and the management server. In the case of the mobile device, in fact, a subroutine operation container is installed on the mobile device to perform an operation to be executed at the mobile device. The specific steps of the operation performed by the subroutine operation container are shown in Fig. 4. Fig. 4 is a flow chart of an exemplary process of an information processing method 400 according to embodiments of the present disclosure, performed at a mobile device, from registration of the mobile device until deployment of an automation subroutine, the information processing method 400 specifically comprising:
Firstly, in step S402, a web page from a management server is loaded.

Next, in step S404, the web page is activated to check capabilities of the mobile device.

In step S406, an overview of capabilities of the mobile device is sent to the management server.

In step S408, an automation subroutine from the management server is received and deployed.

In step S410, the automation subroutine is executed.

Finally, in step S412, data exchange with the management server is performed, based on a result of executing the automation subroutine.

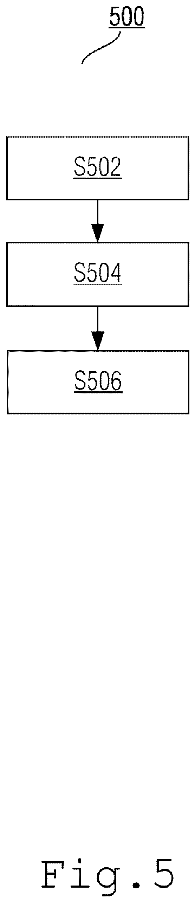

The operating steps performed at the mobile device have been described above with reference to Fig. 4. The operating steps performed at the management server are shown in Fig. 5. Fig. 5 is a flow chart of an exemplary process of an information processing method 500 according to embodiments of the present disclosure, performed at a management server, from registration of a mobile device until deployment of an automation subroutine, the information processing method 500 specifically comprising:
Firstly, in step S502, an overview of capabilities and a subroutine operation container are received from the mobile device, and registered in a registration table.

Next, in step S504, a pre-written automation subroutine is deployed in a subroutine operation container of at least one mobile device in the registration table.

Finally, in step S506, subroutine operation result data is received from the mobile device and exchanged with an automated device.

Through step S506, the management server can help realize data exchange between the subroutine operation container of the mobile device and the automated device in the automation system.

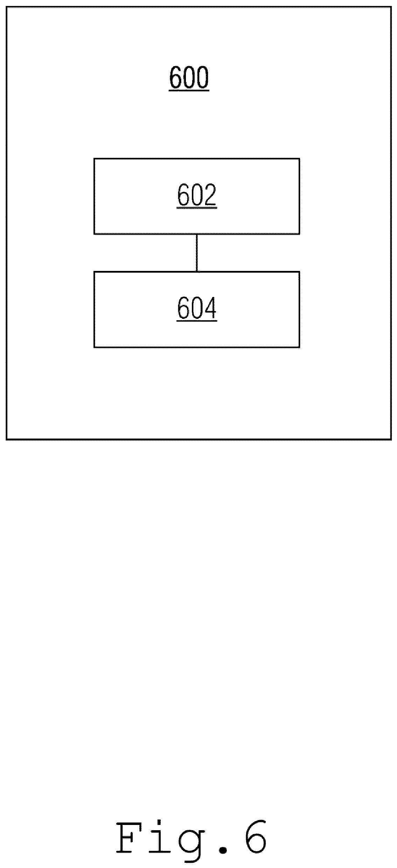

Fig. 6 shows a block diagram of a computing device 600 according to embodiments of the present disclosure, for realizing an information processing method performed at a mobile device or a management server. According to an embodiment, the computing device 600 may comprise at least one processor 602, the processor 602 executing at least one computer-readable instruction (i.e. the abovementioned element realized as software) stored or encoded in a computer-readable storage medium (i.e. a memory 604).

It should be understood that a computer-executable instruction stored in the memory 604, when executed, causes the at least one processor 602 to perform the various operations and functions described above with reference to Figs. 1 - 5 in the embodiments of the present disclosure.

According to an embodiment, a non-transitory machine-readable medium is provided. The non-transitory machine-readable medium may have a machine-executable instruction (i.e. the abovementioned element realized as software) which, when executed by a machine, causes the machine to perform the various operations and functions described above with reference to Figs. 1 - 5 in the embodiments of the present disclosure.

According to an embodiment, a computer program is provided, comprising a computer-executable instruction which, when executed, causes at least one processor to perform the various operations and functions described above with reference to Figs. 1 - 5 in the embodiments of the present disclosure.

According to an embodiment, a computer program product is provided, comprising a computer-executable instruction which, when executed, causes at least one processor to perform the various operations and functions described above with reference to Figs. 1 - 5 in the embodiments of the present disclosure.

It should be understood that all of the embodiments in this description are described in a progressive manner; for parts that are identical or similar in different embodiments, it is sufficient to refer to one embodiment while reading the other, and vice versa; and the description of each embodiment focuses on features that differ from other embodiments. For example, the embodiments relating to the apparatus, embodiments relating to the computing device and embodiments relating to the machine-readable storage medium above are described in relatively simple terms because they are essentially similar to the method embodiments; for related parts, it is sufficient to refer to part of the description of the method embodiments.

Specific embodiments of this description have been described above. Other embodiments are within the scope of the attached claims. In some situations, actions or steps recorded in the claims may be executed in a different order from that in the embodiments and still achieve the desired result. Furthermore, the processes depicted in the drawings do not necessarily require the displayed specific order or consecutive order in order to achieve the desired result. In some embodiments, multi-task processing and parallel processing are also possible or possibly advantageous.

Not all of the steps and units in the structural drawings of the processes and systems above are necessary; some steps or units may be omitted according to actual needs. The apparatus structures described in the embodiments above may be physical structures or logic structures, i.e. some units might be realized by the same physical entity, or some units might be realized by multiple physical entities separately, or may be realized jointly by certain components in multiple independent devices.

The specific implementations expounded above with reference to the drawings describe exemplary embodiments, but do not represent all embodiments that can be realized or that fall within the scope of protection of the claims. The term "exemplary" used throughout this description means "serving as an example, instance or illustration", and does not mean "preferred" or "advantageous" compared to other embodiments. In order to provide an understanding of the technologies described, specific embodiments include specific details. However, these technologies may be implemented in the absence of these specific details. In some instances, to avoid making the concepts of the described embodiments difficult to understand, well known structures and apparatuses are shown in the form of block diagrams.

The above description of the content of the present disclosure is provided to enable any person skilled in the art to realize or use the content of the present disclosure. To a person skilled in the art, various modifications to the content of the present disclosure will be obvious, and the general principles defined herein may be applied to other variants without departing from the scope of protection of the content of the present disclosure. Thus, the content of the present disclosure is not limited to the examples and designs described herein, but is consistent with the broadest scope conforming to the principles and novel features disclosed herein.

The above are merely preferred embodiments of the present invention, which are not intended to limit it. Any modifications, equivalent substitutions or improvements, etc. made within the spirit and principles of the present invention should be included in the scope of protection thereof.

## Claims

1. A method (200) for registering a mobile device in an automation system, wherein the automation system comprises an automated device, a management server and a mobile device, the method (200) comprising:
installing a subroutine operation container on the mobile device (S202);
the subroutine operation container loading a web page from the management server (S204);
the web page being activated to check capability of the mobile device (S206);
the subroutine operation container sending an overview of the capability to the management server (S208); and
the management server registering the subroutine operation container and the overview of the capability in a registration table (S210).

2. The method (200) as claimed in claim 1, wherein the capability comprises at least one of the following: CPU speed, internal memory capacity, storage space, camera parameters, geographic positioning precision, accelerator state, flash lamp state, fingerprint sensor, near field communication (NFC) capability, Bluetooth availability, speaker availability, screen dimensions, vibrator availability.

3. The method (200) as claimed in claim 1 or 2, wherein the step of the subroutine operation container sending an overview of the capability to the management server comprises:
the subroutine operation container establishing a WebSocket connection to the management server, and sending the overview of the capability to the management server via the WebSocket connection.

4. A method (300) for deploying an automation function in a mobile device in an automation system, wherein the automation system comprises an automated device, a management server and a mobile device, wherein subroutine operation containers of multiple mobile devices are registered in the management server, the method (300) comprising:
the management server deploying an automation subroutine in the subroutine operation container of the mobile device (S302);
executing the automation subroutine in the subroutine operation container (S304); and
the subroutine operation container performing data exchange with the management server, based on a result of executing the automation subroutine (S306).

5. The method (300) as claimed in claim 4, wherein the automation subroutine comprises at least one of the following: environment monitoring and processing, acquisition and processing of images and video, QR code acquisition and processing, NFC reading/writing, tracking and processing of position and attitude.

6. The method (300) as claimed in claim 4 or 5, wherein the automation subroutine is written in C/C++ language, and finally compiled in the form of WebAssembly binary code for deployment, the automation subroutine being able to call a programming interface provided by the subroutine operation container.

7. An information processing method (400), comprising:
loading a web page from a management server (S402);
the web page being activated to check capability of a mobile device (S404);
sending an overview of the capability of the mobile device to the management server (S406);
receiving and deploying an automation subroutine from the management server (S408);
executing the automation subroutine (S410); and
performing data exchange with the management server, based on a result of executing the automation subroutine (S412).

8. An information processing method (500), comprising:
receiving an overview of capability and a subroutine operation container from a mobile device, and registering same in a registration table (S502);
deploying a pre-written automation subroutine in a subroutine operation container of at least one mobile device in the registration table (S504); and
receiving subroutine operation result data from the mobile device and exchanging same with an automated device (S506).

9. A computing device (600), comprising:
at least one processor (602); and
a memory (604) coupled to the at least one processor (602), the memory being used to store an instruction which, when executed by the at least one processor (602), causes the processor (602) to perform the method as claimed in claim 7 or 8.

10. A non-transitory machine-readable storage medium, storing an executable instruction which, when executed, causes the machine to perform the method as claimed in claim 7 or 8.

11. A computer program product, tangibly stored on a computer-readable medium and comprising a computer-executable instruction which, when executed, causes at least one processor to perform the method as claimed in claim 7 or 8.
